# EUROPÄISCHE PATENTANMELDUNG

(11) **EP 3 023 604 A1**
(43) Veröffentlichungstag der Anmeldung: **25.05.2016**
(21) Anmeldenummer: 14193607.0
(22) Anmeldetag: 18.11.2014
(51) Int. Cl.: F01D 21/00, F02C 7/143, F02C 7/18, F02C 9/20

(54) **VERFAHREN UND SYSTEM ZUM ABKÜHLEN EINER GASTURBINE**

(71) Anmelder: Siemens Aktiengesellschaft, 80333 München (DE)
(72) Erfinder: Link, Marco, 46049 Oberhausen (DE)

(57) **Zusammenfassung**

Die Erfindung betrifft ein Verfahren zum Abkühlen einer Gasturbine, wobei die Gasturbine aus ihrem Leistungsbetrieb in einen Abkühlbetrieb abgefahren wird, und wobei während des Abkühlbetriebs eine Flüssigkeit in eine von einem Verdichter der Gasturbine angesaugte Luft eingespritzt wird.

## Beschreibung

Die Erfindung betrifft ein Verfahren und ein System zum Abkühlen einer Gasturbine.

Um eine Gasturbine inspizieren und warten zu können, muss die Gasturbine zunächst aus ihrem Leistungsbetrieb abgefahren und ausreichend lange abgekühlt werden. Inspektions- bzw. Wartungsarbeiten können nach Beendigung eines entsprechenden Abkühlungsvorgangs der Gasturbine, der in manchen Fällen etwa vierundzwanzig Stunden dauern kann, begonnen werden. Während des Abkühlungsvorgangs steht die Gasturbine nicht zu ihrer bestimmungsgemäßen Verwendung zur Verfügung.

Aufgabe der Erfindung ist es, die Dauer einer Abkühlung einer Gasturbine zu verkürzen und hierdurch eine Verfügbarkeit der Gasturbine zu erhöhen.

Diese Aufgabe wird durch die unabhängigen Ansprüche gelöst. Vorteilhafte Ausgestaltungen sind insbesondere in den abhängigen Ansprüchen angegeben, die jeweils für sich genommen oder in verschiedener Kombination miteinander einen Aspekt der Erfindung darstellen können.

Nach dem erfindungsgemäßen Verfahren zum Abkühlen einer Gasturbine wird die Gasturbine aus ihrem Leistungsbetrieb in einen Abkühlbetrieb abgefahren und wird während des Abkühlbetriebs eine Flüssigkeit in eine von einem Verdichter der Gasturbine angesaugte Luft eingespritzt.

Durch das erfindungsgemäße Einspritzen der Flüssigkeit während des Abkühlbetriebs der Gasturbine in die von dem Verdichter angesaugte Luft wird die Luftfeuchtigkeit und Masse des Verdichterluftvolumenstroms erhöht, wodurch der Verdichterluftvolumenstrom beim Durchströmen der Gasturbine eine größere Wärmemenge von den Bauteilen der Gasturbine aufnehmen kann. Hierdurch kann die Gasturbine schneller abgekühlt werden. Dadurch können Inspektions- und Wartungsarbeiten an der abgekühlten Gasturbine schneller begonnen werden. Gleichzeitig ist die Gasturbine schneller wieder zur Leistungserzeugung verfügbar.

Zum Einspritzen der Flüssigkeit, beispielsweise Wasser oder Deionat, in die von dem Verdichter angesaugte Luft kann eine herkömmlich bereits vorhandene Vorrichtung verwendet werden, mit der Flüssigkeit im Leistungsbetrieb der Gasturbine zur Steigerung der Leistung der Gasturbine in die von dem Verdichter angesaugte Luft einspritzbar ist. Durch einen solchen Rückgriff auf herkömmlich vorhandene Vorrichtungen zur Durchführung des erfindungsgemäßen Verfahrens kann dieses kostengünstig realisiert werden.

Durch das Einspritzen der Flüssigkeit in die von dem Verdichter angesaugte Luft entstehen in dieser Flüssigkeitströpfchen vorgebbarer Dimensionierung. Beim Verdampfen dieser Flüssigkeitströpfchen vor oder nach ihrem Eintritt in den Verdichter wird der Luft Wärme entzogen. Hierdurch wird die Luft abgekühlt, was sich vorteilhaft auf die mit der Luft erzielbare Kühlleistung auswirkt.

Die Flüssigkeit wird bevorzugt in Abhängigkeit einer Luftfeuchtigkeit der angesaugten Luft, einer Strömungsgeschwindigkeit einer in der Gasturbine im Bereich von wenigstens einem zu kühlenden, strömungsführenden Bauteil der Gasturbine strömenden Kühlluft und einer Temperaturdifferenz zwischen einer Temperatur der im Bereich des wenigstens einen zu kühlenden, strömungsführenden Bauteils strömenden Kühlluft und einer Temperatur des wenigstens einen strömungsführenden Bauteils der Gasturbine in die angesaugte Luft eingespritzt. Hierdurch kann verhindert werden, dass, insbesondere dickwandige, Bauteile der Gasturbine durch einen zu hohen Temperaturgradienten beschädigt werden. Aus der Luftfeuchtigkeit der angesaugten Luft, der Strömungsgeschwindigkeit der Kühlluft und der Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine kann eine Kühlleistung des Verdichterluftmassenstroms ermittelt werden, die zur Regelung der Einspritzung der Flüssigkeit in die von dem Verdichter angesaugte Luft verwendet wird. Insbesondere kann auf Basis der jeweilig ermittelten Kühlleistung des Verdichterluftmassenstroms ermittelt werden, wann und wie stark die Flüssigkeit in die von dem Verdichter angesaugte Luft eingespritzt werden kann, um Beschädigungen an Bauteilen der Gasturbine durch zu hohe Temperaturgradienten zu vermeiden.

Alternativ bevorzugt wird die Flüssigkeit in Abhängigkeit einer Luftfeuchtigkeit der angesaugten Luft, einer Strömungsgeschwindigkeit einer in der Gasturbine im Bereich von wenigstens einem zu kühlenden, strömungsführenden Bauteil der Gasturbine strömenden Kühlluft und einer Temperaturdifferenz zwischen einer Temperatur der angesaugten Luft und einer Temperatur des wenigstens einen strömungsführenden Bauteils der Gasturbine in die angesaugte Luft eingespritzt. Auch hierdurch kann verhindert werden, dass, insbesondere dickwandige, Bauteile der Gasturbine durch einen zu hohen Temperaturgradienten beschädigt werden. Aus der Luftfeuchtigkeit der angesaugten Luft, der Strömungsgeschwindigkeit der Kühlluft und der Temperaturdifferenz zwischen der Temperatur der angesaugten Luft und der Temperatur des wenigstens einen strömungsführenden Bauteils der Gasturbine kann eine Kühlleistung des Verdichterluftmassenstroms ermittelt werden, die zur Regelung der Einspritzung der Flüssigkeit in die von dem Verdichter angesaugte Luft verwendet wird. Insbesondere kann auf Basis der jeweilig ermittelten Kühlleistung des Verdichterluftmassenstroms ermittelt werden, wann und wie stark die Flüssigkeit in die von dem Verdichter angesaugte Luft eingespritzt werden kann, um Beschädigungen an Bauteilen der Gasturbine durch zu hohe Temperaturgradienten zu vermeiden.

Bevorzugt wird während des Abkühlbetriebs ein Öffnungsquerschnitt eines Eintritts in den Verdichter über eine entsprechende Ansteuerung von verstellbaren Einlassleitschaufeln zumindest teilweise vergrößert. Durch das Öffnen des Eintritts in den Verdichter kann der Verdichterluftmassenstrom erhöht werden, was mit einer verbesserten Kühlung der Gasturbine einhergeht. Verstellbare Einlassleitschaufeln sind herkömmlich bei einer Gasturbine vorhanden, so dass auch diese Ausgestaltung kostengünstig realisierbar ist, ohne dass hierzu zusätzliche Bauteile an der Gasturbine angeordnet werden müssen.

Das erfindungsgemäße System zum Abkühlen einer Gasturbine umfasst wenigstens eine stromauf eines Verdichters der Gasturbine anordbare Vorrichtung zum Einspritzen einer Flüssigkeit in eine von dem Verdichter angesaugte Luft und wenigstens eine signaltechnisch mit der Vorrichtung verbindbare Steuer- und/oder Regelelektronik, die eingerichtet ist, zum Einspritzen der Flüssigkeit in die angesaugte Luft während eines Abkühlbetriebs der Gasturbine die Vorrichtung entsprechend anzusteuern.

Mit dem System sind die oben mit Bezug auf das Verfahren genannten Vorteile entsprechend verbunden. Die Vorrichtung zum Einspritzen der Flüssigkeit in die von dem Verdichter angesaugte Luft kann durch eine herkömmlich bereits vorhandene Vorrichtung ausgebildet sein, mit der in einem Leistungsbetrieb der Gasturbine zur Steigerung der Leistung bzw. des Wirkungsgrads der Gasturbine eine Flüssigkeit in die von dem Verdichter angesaugte Luft eingespritzt werden kann. Durch diesen Rückgriff auf bereits vorhandene Komponenten ist das erfindungsgemäße System kostengünstig realisierbar. Die Vorrichtung kann beispielsweise derart ausgebildet sein, dass alle durch die Einspritzung in der Luft entstehenden Flüssigkeitströpfchen bereits vor dem Eintritt in den Verdichter verdampft sind. Mit einer solchen Vorrichtung ist eine sogenannte EVAP-Kühlung der Luft durchführbar. Alternativ kann die Vorrichtung derart ausgebildet sein, dass durch das Einspritzen in der Luft entstehende Flüssigkeitströpfchen auch noch im Verdichter verdampfen. In einem solchen Fall erfolgt eine sogenannte nasse Verdichtung ("wet compression") in dem Verdichter. Die Vorrichtung kann mehrere über ein Pumpsystem mit Flüssigkeit beaufschlagbare Düsen zum Einspritzen der Flüssigkeit in die von dem Verdichter angesaugte Luft aufweisen.

Die Vorrichtung kann kabelgebunden oder kabellos signaltechnisch mit der Steuer- und/oder Regelelektronik verbunden sein. Die Steuer- und/oder Regelelektronik kann separat ausgebildet oder in eine Gasturbinenelektronik integriert sein.

Bevorzugt umfasst das System wenigstens eine Sensoreinheit zum Erfassen einer Luftfeuchtigkeit der angesaugten Luft, wenigstens eine Sensoreinheit zum Erfassen einer Strömungsgeschwindigkeit einer in der Gasturbine im Bereich von wenigstens einem zu kühlenden, strömungsführenden Bauteil der Gasturbine strömenden Kühlluft, wenigstens eine Sensoreinheit zum Erfassen einer Temperatur der im Bereich des wenigstens einen zu kühlenden, strömungsführenden Bauteils strömenden Kühlluft und wenigstens eine Sensoreinheit zum Erfassen einer Temperatur des wenigstens einen strömungsführenden Bauteils der Gasturbine, wobei die Sensoreinheiten signaltechnisch mit der Steuer- und/oder Regelelektronik verbindbar sind, und wobei die Steuer- und/oder Regelelektronik eingerichtet ist, eine Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine zu ermitteln und die Vorrichtung derart anzusteuern, dass die Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine in die angesaugte Luft einspritzbar ist. Mit dieser Ausgestaltung sind die oben mit Bezug auf die entsprechende Ausgestaltung des Verfahrens genannten Vorteile entsprechend verbunden. Die Luftfeuchtigkeit der angesaugten Luft, die Strömungsgeschwindigkeit der Kühlluft, die Temperatur der im Bereich des wenigstens einen zu kühlenden, strömungsführenden Bauteils strömenden Kühlluft und die Temperatur des wenigstens einen strömungsführenden Bauteils der Gasturbine können kontinuierlich oder in diskreten Zeitschritten erfasst und ausgewertet werden. Alternativ kann vorgesehen sein, die Strömungsgeschwindigkeit der Kühlluft nicht über eine Sensoreinheit zu erfassen, sondern aus Maschinenparametern, wie beispielsweise der Drehzahl der Gasturbine, dem Fluiddruck in der Kühlluft im Bereich der zu kühlenden Bauteile der Gasturbine und dergleichen, sowie der Geometrie der Gasturbine, insbesondere von deren zu kühlenden Bauteilen, zu ermitteln.

Alternativ bevorzugt umfasst das System wenigstens eine Sensoreinheit zum Erfassen einer Luftfeuchtigkeit der angesaugten Luft, wenigstens eine Sensoreinheit zum Erfassen einer Strömungsgeschwindigkeit einer in der Gasturbine im Bereich von wenigstens einem zu kühlenden, strömungsführenden Bauteil der Gasturbine strömenden Kühlluft, wenigstens eine Sensoreinheit zum Erfassen einer Temperatur der angesaugten Luft und wenigstens eine Sensoreinheit zum Erfassen einer Temperatur des wenigstens einen strömungsführenden Bauteils der Gasturbine, wobei die Sensoreinheiten signaltechnisch mit der Steuer- und/oder Regelelektronik verbindbar sind, und wobei die Steuer- und/oder Regelelektronik eingerichtet ist, eine Temperaturdifferenz zwischen der Temperatur der angesaugten Luft und der Temperatur des wenigstens einen strömungsführenden Bauteils der Gasturbine zu ermitteln und die Vorrichtung derart anzusteuern, dass die Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der angesaugten Luft und der Temperatur des wenigstens einen strömungsführenden Bauteils der Gasturbine in die angesaugte Luft einspritzbar ist. Mit dieser Ausgestaltung sind die oben mit Bezug auf die entsprechende Ausgestaltung des Verfahrens genannten Vorteile entsprechend verbunden. Die Luftfeuchtigkeit der angesaugten Luft, die Strömungsgeschwindigkeit der Kühlluft, die Temperatur der angesaugten Luft und die Temperatur des wenigstens einen strömungsführenden Bauteils der Gasturbine können kontinuierlich oder in diskreten Zeitschritten erfasst und ausgewertet werden. Alternativ kann vorgesehen sein, die Strömungsgeschwindigkeit der Kühlluft nicht über eine Sensoreinheit zu erfassen, sondern aus Maschinenparametern, wie beispielsweise der Drehzahl der Gasturbine, dem Fluiddruck in der Kühlluft im Bereich der zu kühlenden Bauteile der Gasturbine und dergleichen, sowie der Geometrie der Gasturbine, insbesondere von deren zu kühlenden Bauteilen, zu ermitteln.

Bevorzugt umfasst das System wenigstens eine signaltechnisch mit der Steuer- und/oder Regelelektronik verbindbare Einrichtung zum Variieren eines Öffnungsquerschnitts eines Eintritts in den Verdichter, die wenigstens einen Einlassleitschaufelkranz mit verstellbaren Einlassleitschaufeln aufweist, wobei die Steuer- und/oder Regelelektronik eingerichtet ist, zum zumindest teilweisen Vergrößern des Öffnungsquerschnitts des Eintritts in den Verdichter während des Abkühlbetriebs die Einrichtung entsprechend anzusteuern. Mit dieser Ausgestaltung sind die oben mit Bezug auf die entsprechende Ausgestaltung des Verfahrens genannten Vorteile entsprechend verbunden. Die Einrichtung kann durch eine herkömmlich an der Gasturbine bereits vorhandene Baugruppe gebildet sein, wodurch diese Ausgestaltung kostengünstig realisierbar ist.

Im Folgenden wird die Erfindung unter Bezugnahme auf die anliegende Figur anhand einer bevorzugten Ausführungsform beispielhaft erläutert, wobei die nachfolgend dargestellten Merkmale sowohl jeweils für sich genommen als auch in unterschiedlicher Kombination miteinander einen Aspekt der Erfindung darstellen können. Es zeigt:

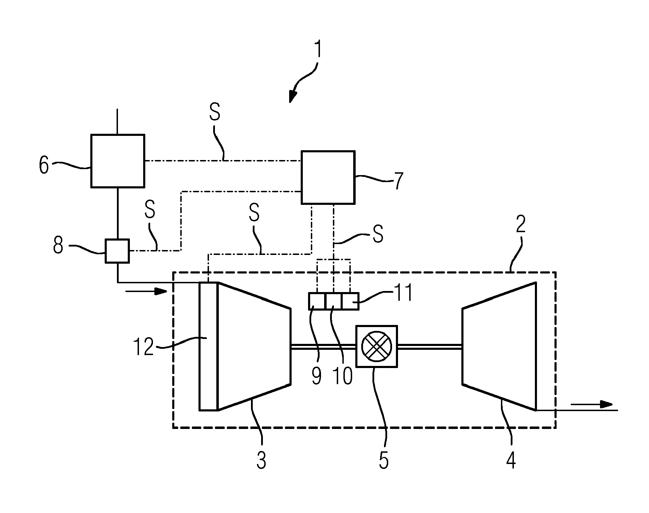

Fig. 1 eine schematische Darstellung eines Ausführungsbeispiels für ein erfindungsgemäßes System.
Figur 1 zeigt eine schematische Darstellung eines Ausführungsbeispiels für ein erfindungsgemäßes System 1 zum Abkühlen einer Gasturbine 2. Die Gasturbine 2 umfasst einen Verdichter 3, eine Turbine 4 und eine den Verdichter 3 fluidtechnisch mit der Turbine 4 verbindende Brennkammer 5.

Das System 1 umfasst eine stromauf des Verdichters 3 der Gasturbine 2 angeordnete Vorrichtung 6 zum Einspritzen einer Flüssigkeit in eine von dem Verdichter 3 angesaugte Luft. Des Weiteren umfasst das System 1 eine über eine Signalverbindung S signaltechnisch mit der Vorrichtung 6 verbindbare Steuer- und/oder Regelelektronik 7. Die Steuer- und/oder Regelelektronik 7 ist eingerichtet, zum Einspritzen der Flüssigkeit in die angesaugte Luft während eines Abkühlbetriebs der Gasturbine 2 die Vorrichtung 6 entsprechend anzusteuern.

Das System 1 umfasst des Weiteren wenigstens eine stromab der Vorrichtung 6 angeordnete Sensoreinheit 8 zum Erfassen einer Luftfeuchtigkeit der von dem Verdichter 3 angesaugten Luft, eine in der Gasturbine 2 angeordnete Sensoreinheit 9 zum Erfassen einer Strömungsgeschwindigkeit einer in der Gasturbine 2 im Bereich von wenigstens einem nicht gezeigten, zu kühlenden, strömungsführenden Bauteil der Gasturbine 2 strömenden Kühlluft, eine in der Gasturbine 2 angeordnete Sensoreinheit 10 zum Erfassen einer Temperatur der im Bereich des wenigstens einen zu kühlenden, strömungsführenden Bauteils strömenden Kühlluft und eine in der Gasturbine 2 angeordnete Sensoreinheit 11 zum Erfassen einer Temperatur des wenigstens einen strömungsführenden Bauteils der Gasturbine 2. Die Sensoreinheiten 8 bis 11 sind jeweils über eine Signalverbindung S signaltechnisch mit der Steuer- und/oder Regelelektronik 7 verbunden.

Die Steuer- und/oder Regelelektronik 7 ist eingerichtet, eine Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine 2 zu ermitteln. Des Weiteren ist die Steuer- und/oder Regelelektronik 7 eingerichtet, die Vorrichtung 6 derart anzusteuern, dass die Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine 2 in die angesaugte Luft einspritzbar ist.

Das System 1 umfasst ferner eine über eine Signalverbindung S signaltechnisch mit der Steuer- und/oder Regelelektronik 7 verbindbare Einrichtung 12 zum Variieren eines nicht gezeigten Öffnungsquerschnitts eines Eintritts in den Verdichter 3. Die Einrichtung 12 umfasst wenigstens einen nicht gezeigten Einlassleitschaufelkranz mit verstellbaren Einlassleitschaufeln. Die Steuer- und/oder Regelelektronik 7 ist eingerichtet, zum zumindest teilweisen Vergrößern des Öffnungsquerschnitts des Eintritts in den Verdichter 3 während des Abkühlbetriebs die Einrichtung 12 entsprechend anzusteuern.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Verfahren zum Abkühlen einer Gasturbine (2), wobei die Gasturbine (2) aus ihrem Leistungsbetrieb in einen Abkühlbetrieb abgefahren wird, und wobei während des Abkühlbetriebs eine Flüssigkeit in eine von einem Verdichter (3) der Gasturbine (2) angesaugte Luft eingespritzt wird.

2. Verfahren gemäß Anspruch 1, wobei die Flüssigkeit in Abhängigkeit einer Luftfeuchtigkeit der angesaugten Luft, einer Strömungsgeschwindigkeit einer in der Gasturbine (2) im Bereich von wenigstens einem zu kühlenden, strömungsführenden Bauteil der Gasturbine (2) strömenden Kühlluft und einer Temperaturdifferenz zwischen einer Temperatur der im Bereich des wenigstens einen zu kühlenden, strömungsführenden Bauteils strömenden Kühlluft und einer Temperatur des wenigstens einen strömungsführenden Bauteils der Gasturbine (2) in die angesaugte Luft eingespritzt wird.

3. Verfahren gemäß Anspruch 1, wobei die Flüssigkeit in Abhängigkeit einer Luftfeuchtigkeit der angesaugten Luft, einer Strömungsgeschwindigkeit einer in der Gasturbine (2) im Bereich von wenigstens einem zu kühlenden, strömungsführenden Bauteil der Gasturbine (2) strömenden Kühlluft und einer Temperaturdifferenz zwischen einer Temperatur der angesaugten Luft und einer Temperatur des wenigstens einen strömungsführenden Bauteils der Gasturbine (2) in die angesaugte Luft eingespritzt wird.

4. Verfahren gemäß einem der Ansprüche 1 bis 3, wobei während des Abkühlbetriebs ein Öffnungsquerschnitt eines Eintritts in den Verdichter (3) über eine entsprechende Ansteuerung von verstellbaren Einlassleitschaufeln zumindest teilweise vergrößert wird.

5. System (1) zum Abkühlen einer Gasturbine (2), aufweisend wenigstens eine stromauf eines Verdichters (3) der Gasturbine (2) anordbare Vorrichtung (6) zum Einspritzen einer Flüssigkeit in eine von dem Verdichter (3) angesaugte Luft und wenigstens eine signaltechnisch mit der Vorrichtung (6) verbindbare Steuer- und/oder Regelelektronik (7), die eingerichtet ist, zum Einspritzen der Flüssigkeit in die angesaugte Luft während eines Abkühlbetriebs der Gasturbine (2) die Vorrichtung (6) entsprechend anzusteuern.

6. System (1) gemäß Anspruch 5, aufweisend
- wenigstens eine Sensoreinheit (8) zum Erfassen einer Luftfeuchtigkeit der angesaugten Luft,
- wenigstens eine Sensoreinheit (9) zum Erfassen einer Strömungsgeschwindigkeit einer in der Gasturbine (2) im Bereich von wenigstens einem zu kühlenden, strömungsführenden Bauteil der Gasturbine (2) strömenden Kühlluft,
- wenigstens eine Sensoreinheit (10) zum Erfassen einer Temperatur der im Bereich des wenigstens einen zu kühlenden, strömungsführenden Bauteils strömenden Kühlluft und
- wenigstens eine Sensoreinheit (11) zum Erfassen einer Temperatur des wenigstens einen strömungsführenden Bauteils der Gasturbine (2),
- wobei die Sensoreinheiten (8, 9, 10) signaltechnisch mit der Steuer- und/oder Regelelektronik (7) verbindbar sind, und
- wobei die Steuer- und/oder Regelelektronik (7) eingerichtet ist, eine Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine (2) zu ermitteln und die Vorrichtung (6) derart anzusteuern, dass die Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der im Bereich des wenigstens einen zu kühlenden, strömungsführenden Bauteils strömenden Kühlluft und der Temperatur des wenigstens einen strömungsführenden Bauteils der Gasturbine (2) in die angesaugte Luft einspritzbar ist.

7. System (1) gemäß Anspruch 5, aufweisend
- wenigstens eine Sensoreinheit (8) zum Erfassen einer Luftfeuchtigkeit der angesaugten Luft,
- wenigstens eine Sensoreinheit (9) zum Erfassen einer Strömungsgeschwindigkeit einer in der Gasturbine (2) im Bereich von wenigstens einem zu kühlenden, strömungsführenden Bauteil der Gasturbine (2) strömenden Kühlluft,
- wenigstens eine Sensoreinheit (10) zum Erfassen einer Temperatur der angesaugten Luft und
- wenigstens eine Sensoreinheit (11) zum Erfassen einer Temperatur des wenigstens einen strömungsführenden Bauteils der Gasturbine (2),
- wobei die Sensoreinheiten (8, 9, 10) signaltechnisch mit der Steuer- und/oder Regelelektronik (7) verbindbar sind, und
- wobei die Steuer- und/oder Regelelektronik (7) eingerichtet ist, eine Temperaturdifferenz zwischen der Temperatur der angesaugten Luft und der Temperatur des wenigstens einen strömungsführenden Bauteils der Gasturbine (2) zu ermitteln und die Vorrichtung (6) derart anzusteuern, dass die Flüssigkeit in Abhängigkeit der jeweilig erfassten Luftfeuchtigkeit der angesaugten Luft, der jeweilig erfassten Strömungsgeschwindigkeit der Kühlluft und der jeweilig ermittelten Temperaturdifferenz zwischen der Temperatur der angesaugten Luft und der Temperatur des wenigstens einen strömungsführenden Bauteils der Gasturbine (2) in die angesaugte Luft einspritzbar ist.

8. System (1) gemäß einem der Ansprüche 5 bis 7, aufweisend wenigstens eine signaltechnisch mit der Steuer- und/oder Regelelektronik (7) verbindbare Einrichtung (12) zum Variieren eines Öffnungsquerschnitts eines Eintritts in den Verdichter (3), die wenigstens einen Einlassleitschaufelkranz mit verstellbaren Einlassleitschaufeln aufweist, wobei die Steuer- und/oder Regelelektronik (7) eingerichtet ist, zum zumindest teilweisen Vergrößern des Öffnungsquerschnitts des Eintritts in den Verdichter (3) während des Abkühlbetriebs die Einrichtung (12) entsprechend anzusteuern.
